# EUROPÄISCHE PATENTSCHRIFT

(11) **EP 2 627 162 B1**
(45) Veröffentlichungstag und Bekanntmachung des Hinweises auf die Patenterteilung: **12.04.2017**
(21) Anmeldenummer: 11817296.4
(22) Anmeldetag: 11.10.2011
(51) Int. Cl.: A01B 3/46

(54) **SCHWENKSTÜTZRAD FÜR ANBAUDREHPFLUG**
PIVOTING SUPPORT WHEEL FOR A MOUNTED REVERSIBLE PLOUGH
ROUE DE SUPPORT PIVOTANTE POUR CHARRUE BRABANT

(30) Priorität: 14.10.2010 DE 102010048287
(43) Veröffentlichungstag der Anmeldung: 21.08.2013
(73) Patentinhaber: Lemken GmbH & Co. KG, 46519 Alpen (DE)
(72) Erfinder: MEURS, Wilhelm, 46519 Alpen (DE)
(74) Vertreter: Schulte & Schulte
(86) Internationale Anmeldenummer: PCT/DE2011/001833
(87) Internationale Veröffentlichungsnummer: WO 2012/051990

(56) Entgegenhaltungen:
- WO-A1-2010/108468
- DE-A1- 2 101 455
- DE-A1- 4 339 323
- DE-A1-102006 039 513

## Beschreibung

Die Erfindung betrifft ein Schwenkstützrad für einen Anbaudrehpflug gemäß dem Oberbegriff des Patentanspruches 1 oder 7.

Derartige Anbaudrehpflüge werden üblicherweise mit einem Schwenkstützrad ausgerüstet, um den Anbaudrehpflug in der Arbeitstiefe zu führen. Die Tiefeneinstellung des Anbaudrehpfluges erfolgt dabei üblicherweise über eine Spindel, über Steckstifte, Hydraulikzylinder oder Stellanschläge. Dabei schwenken die Schwenkstützräder während des Drehvorganges entweder nach vorne oder nach hinten um, um in die gegenüberliegende Arbeitsstellung zu gelangen. Schwenkstützräder, die nach vorne umschwenken, müssen dazu mehr als 180° umschwenken, um in die neue Arbeitsstellung zu gelangen. Dabei befindet sich der Schwenkbereich zwischen den Tiefenbegrenzungen bzw. Stellanschlägen für die rechts wendende Arbeitsstellung und die links wendende Arbeitsstellung. Diese Schwenkstützräder benötigen daher Mittel, die sicherstellen, dass sie beim Absenken des Anbaudrehpfluges nicht versehentlich nach vorne durchschwenken. Schwenkstützräder, die nach hinten umschwenken, brauchen nur weniger als 180° umschwenken. Für diesen Schwenkvorgang müssen sie aber an den Tiefenbegrenzungen bzw. Stellanschlägen vorbeigeführt umschwenken. Um dies zu erreichen wird z.B. die Schwenkbewegung entsprechend angepasst oder die Tiefenbegrenzung unwirksam gemacht. Ein derartiges Schwenkstützrad für Anbaudrehpflüge, das nach hinten umschwenkt und sich über eine Stützstrebe gegen den Pflugrahmen abstützt, ist der deutschen Offenlegungsschrift DE 10 2006 039 513 A1 zu entnehmen. Die Stützstrebe wird hier durch einen Hydraulikzylinder gebildet, der über Hydraulikleitungen mit der Hydraulikanlage der Drehvorrichtung in Verbindung steht. Wird der Pflugrahmen mittels der Drehvorrichtung gedreht, wird auch der Hydraulikzylinder des Schwenkstützrades betätigt und das Schwenkstützrad umgeschwenkt. Der Ölstand im Hydraulikzylinder bildet dann während der Pflugarbeit die Tiefenbegrenzung, die durch Ablassen des Öls für den Drehvorgang unwirksam gemacht wird. Das Schwenkstützrad kann dann ungehindert - angetrieben von dem Hydraulikzylinder - umschwenken. Über eine Folgesteuerung wird dafür gesorgt, dass alle Bewegungsvorgänge in der gewünschten Reihenfolge durchgeführt werden. Das Vorsehen von Hydraulikleitungen und einem Hydraulikzylinder in Verbindung mit einer Folgesteuerung verbessert zwar den Bedienkomfort des Schwenkstützrades und damit auch des gesamten Anbaudrehpfluges, es beinhaltet aber auch unter anderem die Nachteile eines erhöhten Preises, eines erhöhten Gewichtes und auch eines erhöhten Montageaufwandes insbesondere wegen der Hydraulikleitungen und Ventile. Aus der DE 21 01 455 ist ein Anbaukehrpflug mit einem an seinem drehbar gelagerten Rahmen schwenkbar angeordneten, ein Bodenrad aufnehmenden Tragarm bekannt, der mittels einer Arretiervorrichtung feststellbar ist. Nachteilig ist an dieser Lösung u. a., dass die Schwenkbewegung des schwenkbaren Teils des Stützrades unkontrolliert stattfindet, d. h. bei diesem Schwenkvorgang kann es zu einem besonders heftigen Anschlagen kommen, was aufgrund der hohen dabei entstehenden dynamischen Kräfte zu einer hohen Beanspruchung der Baugruppe rund um die Stützstrebe führt.

Aufgabe der Erfindung ist es, ein Schwenkstützrad für Anbaudrehpflüge zu schaffen, das einfach aufgebaut ist, das Gewichtsvorteile beinhaltet und das auch nur einen geringen Montageaufwand benötigt.

Diese Aufgabe der Erfindung wird einerseits durch die Merkmale des kennzeichnenden Teiles des Anspruches 1 gelöst.

Dadurch, dass der Schwenkanschlag an der Stützstrebe angeordnet ist, die immer bei der Schwenkbewegung des Schwenkstützrades mitbewegt wird, ist immer eine günstige Schwerpunktlage des Schwenkanschlages sichergestellt, insbesondere auch weil die Position des Schwerpunktes des Schwenkanschlages in Relation zur Führungsachse in allen Schwenkpositionen nur eine funktionsgerechte Bewegung des Schwenkanschlages zulässt. Der Schwenkanschlag bewegt sich dabei immer rechtzeitig in die erforderliche Entriegelungsstellung oder Verriegelungsstellung. Wird der Anbaudrehpflug ausgehoben, schwenkt das Schwenkstützrad schon vor dem Beginn des Drehvorganges aufgrund seiner Schwerkraft um seine Schwenkachse mehr oder weniger nach vorne und unten durch. Der Schwenkanschlag ist dann entlastet. Wird der Pflugrahmen gedreht, schwenkt der Schwenkanschlag schon deutlich vor Erreichen der Mittelstellung in die Entriegelungsstellung. Erst nach Überwinden der Mittelstellung befindet sich der Schwerpunkt des drehbaren Teils des Schwenkstützrades in einer Position, die ein Umschwenken des Schwenkstützrades über die Mittelstellung hinaus zulässt. Das Schwenkstützrad kann so frei umschwenken, da sich der Schwenkanschlag bereits in der Entriegelungsstellung befindet. Wenn der Pflugrahmen mehr als 90 ° gedreht wurde, schwenkt das schwenkbare Teil des Schwenkstützrades um die Schwenkachse nach unten, wodurch die Stützstrebe und damit auch der Schwenkanschlag in eine Position gelangen, in der die Schwerkraft des Schwenkanschlages bereits ausreicht, wieder zurück in die Anschlagstellung für die Begrenzung der Arbeitstiefe zu schwenken.

Die Erfindung sieht weiter vor, dass das Gelenk als Gelenkachse ausgebildet ist und annähernd quer zur Arbeitsrichtung des Anbaudrehpfluges angeordnet ist. Durch die Ausbildung des Gelenkes als Gelenkachse wird bewirkt, dass die Stützstrebe immer so geführt wird, dass der Schwenkanschlag sowohl für die rechts wendende Pflugarbeit als auch für die links wendende Pflugarbeit jeweils in der gleiche Weise geführt wird.

Erfindungsgemäß ist weiter vorgesehen, dass die Führungsachse in einem Winkel von 90° zur Gelenkachse und zur Stützrichtung der Stützstrebe angeordnet ist. Durch diese Anordnung der Führungsachse wird es ermöglicht, dass in der jeweiligen Position des Pflugrahmens der Schwenkanschlag entweder in die Anschlagstellung zur Begrenzung der Arbeitstiefe gelangt oder aber auch in die Stellung, in der die Abstützfunktion aufgehoben werden soll, was dann der Entriegelungsstellung entspricht.

Gemäss Anspruch 1 ist vorgesehen, dass die Stützstrebe einen Dämpfer aufweist, der den Schwenkvorgang des schwenkbaren Teils des Schwenkstützrades abbremsend und/oder dämpfend ausgebildet ist. Um die Schwenkbewegung des schwenkbaren Teils des Schwenkstützrades kontrolliert ablaufen zu lassen, ist der Dämpfer vorgesehen, der diese Bewegung abbremst bzw. dämpft.

Erfindungsgemäß ist weiter vorgesehen, dass der Schwenkanschlag mit Führungsachse verschiebbar geführt mit der Stützstrebe bzw. dem Dämpfer verbunden ist, dass ein Gegenanschlag vorgesehen ist, der mit dem weiteren Gelenk einstellbar verbunden ist und dass der Schwenkanschlag eine Anschlagplatte aufweist, die sich in Arbeitstiefenführungsstellung sowohl gegen den Gegenanschlag als auch gegen den Dämpfer bzw. einen anderen gleichwertigen Anschlag an der Stützstrebe abstützend ausgebildet ist. Dadurch dass der Schwenkanschlag mit Führungsachse verschiebbar geführt ist, wird nach dem Ausheben des Anbaudrehpfluges vor dem Drehvorgang der Schwenkanschlag vollständig entlastet. Zum einen befindet er sich dann nicht mehr in Kontakt mit dem Gegenanschlag und zum anderen auch nicht mehr in Anschlagstellung mit einem Anschlag der Stützstrebe oder dem Dämpfer. Die freie Umschwenkbarkeit des Schwenkanschlages wird dadurch noch unterstützt.

Die Erfindung sieht weiter vor, dass die Stützstrebe längenveränderbar ausgebildet ist. Durch eine Längenänderung der Stützstrebe wird die Arbeitstiefe des Anbaudrehpfluges verändert. Dabei bietet es sich an, eine Stellvorrichtung am Gegenanschlag vorzusehen, z.B. eine Stelleinrichtung mit Steckstiften, um die Arbeitstiefe des Anbaudrehpfluges einfach zu verstellen. Montagetechnisch wird es als vorteilhaft angesehen, die Stützstrebe als eine Einheit herzustellen, zusammen mit dem Schwenkanschlag und dem Gegenanschlag der Stelleinrichtung, die dann als Einheit vormontiert an das Schwenkstützrad angebaut werden kann.

Erfindungsgemäß ist weiter vorgesehen, dass die Stützstrebe am Tragrahmen oder am Radhalm umsetzbar angeordnet ist. Diese Ausführungsform macht es möglich, ohne eine Längenänderung der Stützstrebe die Arbeitstiefe des Anbaudrehpfluges zu verändern. Die Stützstrebe wird dann am Radhalm oder am Tragrahmen entsprechend umgesetzt.

Die Aufgabe der Erfindung wird andererseits durch die Merkmale des kennzeichnenden Teiles des Anspruches 7 gelöst.

Es ist vorgesehen, dass der Radhalm einen Schwenkanschlag aufweist, der mit der Stützstrebe in Verbindung steht und dass der Schwenkanschlag um eine am Radhalm angeordnete Führungsachse während des Drehvorganges durch Schwerkraft aus der Anschlagstellung zur Aufhebung der Abstützfunktion heraus bewegbar und während und nach dem Drehvorgang durch Schwerkraft wieder in die Anschlagstellung zur Begrenzung der Arbeitstiefe zurück schwenkbar ausgebildet ist, wobei die Führungsachse bei einem Anbaudrehpflug, bei dem das Schwenkstützrad während des Drehvorganges unterhalb des Pflugrahmens mitgeführt wird, in halbgedrehter Drehposition und in Arbeitsstellung oberhalb des Schwerpunktes des Schwenkanschlages angeordnet ist. Diese Ausführung beinhaltet die gleichen Vorteile wie die Version mit dem an der Stützstrebe angeordneten Schwenkanschlag, jedoch gelangt hier der Schwenkanschlag während des Drehvorganges noch früher in die Anschlagstellung, was insbesondere bei starken Hanglagen die Funktionssicherheit des Systems noch erhöht.

Die Erfindung zeichnet sich insbesondere durch einen Anbaudrehpflug mit einem Schwenkstützrad aus, bei dem die Arbeitstiefenführung über eine Stützstrebe des Schwenkstützrades eingestellt werden kann. Die Stützstrebe ist mit dem Radhalm und dem Tragrahmen des Schwenkstützrades verbunden und ist mit einem Schwenkanschlag ausgerüstet, der durch Schwerkraft während des Drehvorganges in eine Entriegelungsstellung schwenkt und vor Beendigung des Drehvorganges wieder in die Stellung zurückschwenkt, mit der die Arbeitstiefe des Anbaudrehpfluges begrenzt wird. Dadurch dass der Schwenkanschlag an der Stützstrebe angeordnet ist, werden während des Drehvorganges des Anbaudrehpfluges Schwerpunktslagen des Schwenkanschlages in Relation zur Führungsachse geschaffen, die ein sicheres und frühzeitiges Umschwenken des Schwenkanschlages in die Entriegelungsstellung bzw. Anschlagstellung sicherstellen.

Weitere Einzelheiten der Erfindung sind den Figuren und der Figurenbeschreibung zu entnehmen. Es zeigen:
- Figur 1: eine perspektivische Darstellung des Schwenkstützrades in Arbeitsstellung und
- Figur 2: eine Seitenansicht des Schwenkstützrades in halbgedrehter Stellung des Anbaudrehpfluges.

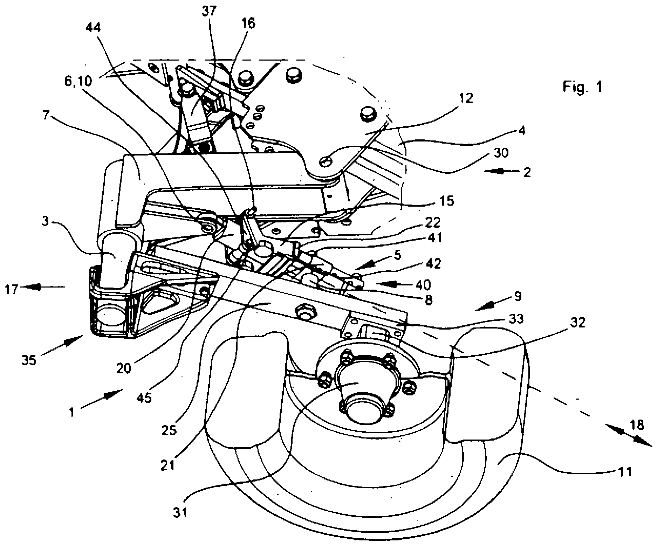

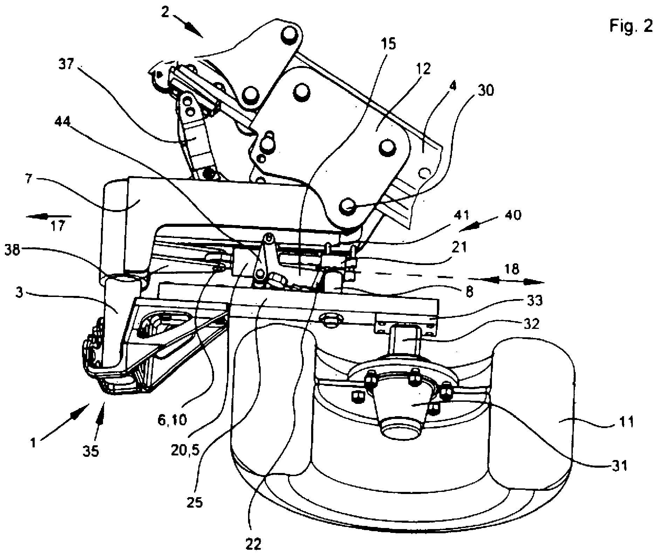

Figur 1 zeigt eine perspektivische Darstellung des Schwenkstützrades 1 in Arbeitsstellung. Von dem Anbaudrehpflug 2 sind nur Teile des Pflugrahmens 4 mit den Rahmenplatten 12 dargestellt. Der Tragrahmen 7 des Schwenkstützrades 1 ist über die Tragachse 30 mit den Rahmenplatten 12 des Pflugrahmens 4 verbunden. In Arbeitsrichtung 17 vor der Tragachse 30 befindet sich die Schwenkachse 3, um die sich das Rad 11 mit Radhalm 25 jeweils in die entweder links wendende oder rechts wendende Arbeitsstellung schwenkt. Das Rad 11 ist über die Nabe 31, die Achse 32 und die Flanschplatte 33 mit dem Radhalm 25 verbunden, was insbesondere der Fig. 2 zu entnehmen ist. Funktionsmäßig befindet sich zwischen der Schwenkachse 3 und dem Radhalm 25 eine Einrichtung 35, mit der der Radhalm 25 mit Rad 11 so umgeschwenkt werden kann, dass das Schwenkstützrad 1 auch als Transporteinrichtung verwendet werden kann. Der Radhalm 25 mit Rad 11 wird dazu um 90 ° in die Transportstellung umgeschwenkt und in dieser Stellung fixiert. Am Tragrahmen 7 ist über das Gelenk 6 bzw. die Gelenkachse 10 die Stützstrebe 5 befestigt. Die Stützstrebe 5 ist außerdem über das Gelenk 8 und den Gegenanschlag 21 mit dem Radhalm 25 verbunden. Der Gegenanschlag 21 weist eine Stellvorrichtung 40 mit Steckstift 41 auf, über die die Tiefenführung und damit auch die Arbeitstiefe des Anbaudrehpfluges 2 eingestellt bzw. verändert werden kann. An der Stützstrebe 5 ist der Schwenkanschlag 15 um die Führungsachse 16 begrenzt schwenkbar gelagert. Über die Schwinge 44, die um die Schwingenachse 45 schwenkbar angeordnet ist, wird gewährleistet, dass der Schwenkanschlag 15 mit seiner Anschlagplatte 22 in ausgehobener Pflugstellung so versetzbar ist, dass die Anschlagplatte 22 keinen Kontakt mehr mit dem Dämpfer 20 hat. Der Dämpfer 20 ist Bestandteil der Stützstrebe 5 und sorgt dafür, dass während des Schwenkvorganges des schwenkbaren Teiles 9 des Schwenkstützrades 1 die Schwenkung kontrolliert abläuft. Der Schwenkanschlag 15 befindet sich in der Figur 1 in Anschlagstellung. Der Gegenanschlag 21 hat in Arbeitsstellung Kontakt mit der Anschlagplatte 22 und schiebt diese gegen den Dämpfer 20. Wie zuvor erwähnt, wird dieses Verschieben durch die Schwinge 44 ermöglicht. Diese Anschlagstellung, die gleichzeitig die Arbeitstiefe des Anbaudrehpfluges vorgibt, kann über die Stellvorrichtung 40 mit Steckstift 41 verändert werden. Die Stellvorrichtung 40 weist dazu mehrere Bohrungen 42 auf. Die Laufrichtung des Rades 11 kann jeweils der von der Arbeitsbreite des Pfluges abhängigen Arbeitsrichtung 17 angepasst werden, in dem der Tragrahmen 7 um die Tragachse 30 entsprechend verschwenkt und mittels Stützstrebe 37 entsprechend fixiert werden. Bei Anbaudrehpflügen 2 mit variabler Arbeitsbreite wird der Tragrahmen 7 und damit die Laufrichtung des Rades 11 automatisch immer in die richtige Position verschwenkt.

Die Figur 2 zeigt eine Seitenansicht des Schwenkstützrades in halbgedrehter Stellung des Anbaudrehpfluges 2. Sie verdeutlicht auch, dass der Schwenkanschlag 15 der Stützstrebe 5 nach unten in Richtung Boden geschwenkt ist und somit die Schwenkbewegung des Radhalmes 25 um die Schwenkachse 3 nicht behindert. Der Gegenanschlag 21 mit Stellvorrichtung 40 und der Steckstift 41 kommen somit nicht in Kontakt mit der Anschlagplatte 22 des Schwenkanschlages 15. Die Schwinge 44 ermöglicht eine Versetzbarkeit des Schwenkanschlages 15, so dass er ohne Kontakt mit dem Dämpfer 20 bzw. mit der Stützstrebe verschwenken kann. Auf die Verbindung des Radhalmes 25 über die Einrichtung 35 mit der Schwenkachse 3 wird hier nicht näher eingegangen, da dies nicht systemrelevant ist. Die Stützstrebe 5 mit Dämpfer 20 ist über das Gelenk 6 bzw. die Gelenkachse 10 mit dem Tragrahmen 7 über die Anschlagplatten 38 verbunden. Um eine sichere Schwenkbarkeit des Schwenkanschlages 15 sicherzustellen, befindet sich die Führungsachse 16, um die der Schwenkanschlag 15 schwenkbar angeordnet ist, oberhalb des Schwerpunktes des Schwenkanschlages 15.

## Patentansprüche

1. Schwenkstützrad (1) für einen Anbaudrehpflug (2), das um eine in Pflugstellung annähernd waagerecht und quer zur Arbeitsrichtung angeordnete Schwenkachse (3) schwenkbar mit dem Pflugrahmen (4) verbunden ist, wobei der Pflugrahmen (4) auf der einen Seite rechts wendende Pflugkörper und auf der gegenüberliegenden Seite links wendende Pflugkörper trägt und um eine Drehachse drehbar mit einem Dreipunktturm verbunden ist, so dass wahlweise mit der Seite mit den rechts wendenden Pflugkörpern oder mit der Seite mit den links wendenden Pflugkörpern gepflügt werden kann, wobei das Schwenkstützrad (1) eine Stützstrebe (5) aufweist, die zum einen über ein Gelenk (6) mit dem Tragrahmen (7) des Schwenkstützrades (1) und zum anderen über ein weiteres Gelenk (8) mit dem schwenkbaren Teil (9) bzw. dem Radhalm (25) des Schwenkstützrades (1) verbunden ist, über die sich der Pflugrahmen (4) mittelbar auf das Rad (11) des Schwenkstützrades (1) zur Begrenzung der Arbeitstiefe des Anbaudrehpfluges (2) abstützt, wobei die Stützstrebe (5) einen Schwenkanschlag (15) aufweist, der um eine an der Stützstrebe (5) angeordnete Führungsachse (16) während des Drehvorganges des Anbaudrehpfluges (2) durch Schwerkraft aus der Anschlagstellung zur Aufhebung der Abstützfunktion heraus bewegbar und während und nach dem Drehvorgang durch Schwerkraft wieder in die Anschlagstellung zur Begrenzung der Arbeitstiefe zurück schwenkbar ausgebildet ist, wobei die Führungsachse (16) bei einem Anbaudrehpflug (2), bei dem das Schwenkstützrad (1) während des Drehvorganges unterhalb des Pflugrahmens (4) mitgeführt wird, in halbgedrehter Drehposition und in Arbeitsstellung oberhalb des Schwerpunktes des Schwenkanschlages (15) angeordnet ist,
**dadurch gekennzeichnet,**
**dass** die Stützstrebe (5) einen Dämpfer (20) aufweist, der den Schwenkvorgang des schwenkbaren Teils (9) des Schwenkstützrades (1) abbremsend und/oder dämpfend ausgebildet ist.

2. Schwenkstützrad für einen Anbaudrehpflug gemäß Anspruch 1,
**dadurch gekennzeichnet,**
**dass** das Gelenk (6) als Gelenkachse (10) ausgebildet ist und annähernd quer zur Arbeitsrichtung (17) des Anbaudrehpfluges (2) angeordnet ist.

3. Schwenkstützrad für einen Anbaudrehpflug gemäß Anspruch 1,
**dadurch gekennzeichnet,**
**dass** die Führungsachse (16) in einem Winkel von 90° zur Gelenkachse (10) und zur Stützrichtung (18) der Stützstrebe (5) angeordnet ist.

4. Schwenkstützrad für einen Anbaudrehpflug gemäß Anspruch 1 bis 3,
**dadurch gekennzeichnet,**
**dass** der Schwenkanschlag (15) mit Führungsachse (16) verschiebbar geführt mit der Stützstrebe (5) bzw. dem Dämpfer (20) verbunden ist, dass ein Gegenanschlag (21) vorgesehen ist, der mit dem weiteren Gelenk (8) einstellbar verbunden ist und dass der Schwenkanschlag (5) eine Anschlagplatte (22) aufweist, die sich in Arbeitstiefenführungsstellung sowohl gegen den Gegenanschlag (21) als auch gegen den Dämpfer (20) bzw. einen anderen gleichwertigen Anschlag an der Stützstrebe (5) abstützend ausgebildet ist.

5. Schwenkstützrad für einen Anbaudrehpflug gemäß Anspruch 1,
**dadurch gekennzeichnet,**
**dass** die Stützstrebe (5) längenveränderbar ausgebildet ist.

6. Schwenkstützrad für einen Anbaudrehpflug gemäß Anspruch 1,
**dadurch gekennzeichnet,**
**dass** die Stützstrebe (5) am Tragrahmen (7) oder am Radhalm (25) umsetzbar angeordnet ist.

7. Schwenkstützrad (1) für einen Anbaudrehpflug (2), das um eine in Pflugstellung annähernd waagerecht und quer zur Arbeitsrichtung angeordnete Schwenkachse (3) schwenkbar mit dem Pflugrahmen (4) verbunden ist, wobei der Pflugrahmen (4) auf der einen Seite rechts wendende Pflugkörper und auf der gegenüberliegenden Seite links wendende Pflugkörper trägt und um eine Drehachse drehbar mit einem Dreipunktturm verbunden ist, so dass wahlweise mit der Seite mit den rechts wendenden Pflugkörpern oder mit der Seite mit den links wendenden Pflugkörpern gepflügt werden kann, wobei das Schwenkstützrad (1) eine Stützstrebe (5) aufweist, die zum einen über ein Gelenk (6) mit dem Tragrahmen (7) des Schwenkstützrades (1) und zum anderen über ein weiteres Gelenk (8) mit dem schwenkbaren Teil (9) bzw. dem Radhalm (25) des Schwenkstützrades (1) verbunden ist, über die sich der Pflugrahmen (4) mittelbar auf das Rad (11) des Schwenkstützrades (1) zur Begrenzung der Arbeitstiefe des Anbaudrehpfluges (2) abstützt, wobei der Radhalm (25) einen Schwenkanschlag aufweist, der mit der Stützstrebe (5) in Verbindung steht und dass der Schwenkanschlag um eine am Radhalm (25) angeordnete Führungsachse während des Drehvorganges durch Schwerkraft aus der Anschlagstellung zur Aufhebung der Abstützfunktion heraus bewegbar und während und nach dem Drehvorgang durch Schwerkraft wieder in die Anschlagstellung zur Begrenzung der Arbeitstiefe zurück schwenkbar ausgebildet ist, wobei die Führungsachse (16) bei einem Anbaudrehpflug (2), bei dem das Schwenkstützrad (1) während des Drehvorganges unterhalb des Pflugrahmens (4) mitgeführt wird, in halbgedrehter Drehposition und in Arbeitsstellung oberhalb des Schwerpunktes des Schwenkanschlages angeordnet ist,
**dadurch gekennzeichnet,**
**dass** die Stützstrebe (5) einen Dämpfer (20) aufweist, der den Schwenkvorgang des schwenkbaren Teils (9) des Schwenkstützrades (1) abbremsend und/oder dämpfend ausgebildet ist.

## Claims

1. Swivelling support wheel (1) for a mounted reversible plough (2), which is connected with the plough frame (4) rotatable around a swivelling shaft (3) that is positioned in the ploughing position approximately horizontally and transverse to the direction of working, whereby the plough frame (4) supports plough bodies on the one side that turn to the right and on the opposite side plough bodies that turn to the left and is connected swivelling around a pivot with a headstock, so that ploughing can be carried out optionally with the side with the plough bodies turning right or with the side with the plough bodies turning left, whereby the swivelling support wheel (1) has a brace (5) that on the one hand is connected via a joint (6) with the support frame (7) of the swivelling support wheel (1) and on the other hand is connected via an additional joint (8) with the swivelling part (9) or the wheel shaft (25) of the swivelling support wheel (1), on which the plough frame (4) is supported directly on the wheel (11) of the swivelling support wheel (1) to limit the working depth of the mounted reversible plough (2), whereby the brace (5) has a swivelling stop (15) that is designed to be movable around a guide axle (16) located on the brace (5) during the rotating process of the mounted reversible plough (2) out of the stop position through gravity to cancel the support function and back into the stop position to limit the working depth through gravity during and after the rotating process, whereby with a mounted reversible plough (2) in which the swivelling support wheel (1) is carried underneath the plough frame (4) during the rotating process the guide axle (16) is positioned above the centre of gravity of the swivelling stop (15) in a half-turned turning position and in the working position,
**characterised in that**
the brace (5) has a damper (20) that is designed to brake and/or dampen the swivelling process of the swivelling part (9) of the swivelling support wheel (1).

2. Swivelling support wheel for a mounted reversible plough in accordance with claim 1,
**characterised in that**
the joint (6) is designed as a joint axle (10) and positioned approximately transverse to the direction of working (17) of the mounted reversible plough (2).

3. Swivelling support wheel for a mounted reversible plough in accordance with claim 1,
**characterised in that**
the guide axle (16) is positioned at an angle of 90° to the joint axle (10) and to the direction of support (18) of the brace (5).

4. Swivelling support wheel for a mounted reversible plough in accordance with claim 1 to 3,
**characterised in that**
the swivelling stop (15) is connected with the brace (5) or the damper (20) guided with the guide axle (16), that a counterstop (21) is provided that is adjustably connected with the additional joint (8) and that the swivelling stop (5) has a stop plate (22), which in the working depth guiding position rests both against the counterstop (21) and against the damper (20) or another equivalent stopper on the brace (5).

5. Swivelling support wheel for a mounted reversible plough in accordance with claim 1,
**characterised in that**
that the length of the brace (5) is designed to be adjustable.

6. Swivelling support wheel for a mounted reversible plough in accordance with claim 1,
**characterised in that**
that the brace (5) is positioned rotatably at the support frame (7) or at the wheel shaft (25).

7. Swivelling support wheel (1) for a mounted reversible plough (2), which is connected with the plough frame (4) rotatable around a swivelling shaft (3) that is positioned in the ploughing position approximately horizontally and transverse to the direction of working, whereby the plough frame (4) supports plough bodies on the one side that turn to the right and on the opposite side plough bodies that turn to the left and is connected swivelling around a pivot with a headstock, so that ploughing can be carried out optionally with the side with the plough bodies turning right or with the side with the plough bodies turning left, whereby the swivelling support wheel (1) has a brace (5) that on the one hand is connected via a joint (6) with the support frame (7) of the swivelling support wheel (1) and on the other hand is connected via an additional joint (8) with the swivelling part (9) or the wheel shaft (25) of the swivelling support wheel (1), on which the plough frame (4) is supported directly on the wheel (11) of the swivelling support wheel (1) to limit the working depth of the mounted reversible plough (2), whereby the wheel shaft (25) has a swivelling stop that is connected with the brace (5) and that the swivelling stop is designed to be swivellable around a guide axle located on the wheel shaft (25) during the rotating process through gravity out of the stop position to cancel the support function and back into the stop position to limit the working depth through gravity during and after the rotating process, whereby with a mounted reversible plough (2) in which the swivelling support wheel (1) is carried underneath the plough frame (4) during the rotating process the guide axle (16) is positioned above the centre of gravity of the swivelling stop (15) in a half-turned turning position and in the working position,
**characterised in that**
the brace (5) has a damper (20) that is designed to brake and/or dampen the swivelling process of the swivelling part (9) of the swivelling support wheel (1).

## Revendications

1. Roue d'appui pivotante (1) pour une charrue réversible attelée (2), qui est reliée de façon pivotante au cadre de la charrue (4) dans un axe de pivotement (3) disposé, en position de labourage, à peu près à l'horizontale et perpendiculairement au sens de labourage, sachant que le cadre de la charrue (4) porte d'un côté des corps de charrue tournant à droite et sur le côté opposé des corps de charrue tournant à gauche et est relié de façon rotative à une tourelle à trois points autour d'un axe rotatif de façon à pouvoir labourer au choix avec le côté des corps de charrue tournant à droite ou avec le côté des corps de charrue tournant à gauche, sachant que la roue d'appui pivotante (1) présente une traverse d'appui (5) qui est reliée d'une part, via une articulation (6), au cadre porteur (7) de la roue d'appui pivotante (1) et de l'autre, via une autre articulation (8), à la partie pivotante (9) ou à la tige (25) de la roue d'appui pivotante (1), par l'intermédiaire de laquelle le cadre de la charrue (4) s'appuie indirectement sur la roue (11) de la roue d'appui pivotante (1) afin de limiter la profondeur de travail de la charrue réversible attelée (2), sachant que la traverse d'appui (5) présente une butée pivotante (15), est réalisée de manière à pouvoir être sortie par la force de gravité hors de la position de butée autour d'un axe de guidage (16) disposé sur la traverse d'appui (5) pendant le processus de rotation afin d'éliminer la fonction d'appui et à pouvoir être remise en place en position de butée par la force de gravité après le processus de rotation afin d'éliminer la profondeur de travail, sachant que l'axe de guidage (16), dans le cas d'une charrue réversible attelée (2) pour laquelle la roue d'appui pivotante (1) est entraînée en dessous du cadre de la charrue (4) pendant le processus de rotation, est disposé en position de rotation à moitié tournée et en position de travail au-dessus du centre de gravité de la butée pivotante (15),
**caractèrisèe par le fait**
que la traverse d'appui (5) présente un amortisseur (20) qui est réalisé de façon à freiner et/ou à amortir le processus de pivotement de la pièce pivotante (9) de la roue d'appui pivotante (1).

2. Roue d'appui pivotante pour une charrue réversible attelée selon la revendication 1,
**caractèrisèe par le fait**
que l'articulation (6) est réalisée sous la forme d'un axe articulé (10) et est disposé à peu près perpendiculairement au sens du travail (17) de la charrue réversible attelée (2).

3. Roue d'appui pivotante pour une charrue réversible attelée selon la revendication 1,
**caractèrisèe par le fait**
que l'axe de guidage (16) est disposé dans un angle de 90° par rapport à l'axe articulé (10) et au sens de soutien (18) de la traverse d'appui (5).

4. Roue d'appui pivotante pour une charrue réversible attelée selon la revendication 1 à 3,
**caractèrisèe par le fait**
que la butée pivotante (15) avec axe de guidage (16) est réalisée en étant reliée de façon à pouvoir être déplacée avec la traverse d'appui (5) ou l'amortisseur (20), qu'une contre-butée (21) est prévue, laquelle est reliée de façon à être réglée avec une autre articulation (8) et que la butée pivotante (5) présente une plaque de butée (22) qui est réalisée de façon à servir d'appui en position de guidage de profondeur de travail, à la fois contre la contre-butée (21) et aussi contre l'amortisseur (20) ou une autre butée de même valeur sur la traverse d'appui (5).

5. Roue d'appui pivotante pour une charrue réversible attelée selon la revendication 1,
**caractèrisèe par le fait**
que la traverse d'appui (5) est réalisée de façon à ce que sa longueur puisse être modifiée.

6. Roue d'appui pivotante pour une charrue réversible attelée selon la revendication 1,
**caractèrisèe par le fait**
que la traverse d'appui (5) est disposée de façon à pouvoir être utilisée sur le cadre porteur (7) ou la tige (25).

7. Roue d'appui pivotante (1) pour une charrue réversible attelée (2), qui est reliée de façon pivotante au cadre de la charrue (4) dans un axe de pivotement (3) disposé, en position de labourage, à peu près à l'horizontale et perpendiculairement au sens de labourage, sachant que le cadre de la charrue (4) porte d'un côté des corps de charrue tournant à droite et sur le côté opposé des corps de charrue tournant à gauche et est relié de façon rotative à une tourelle à trois points autour d'un axe rotatif de façon à pouvoir labourer au choix avec le côté des corps de charrue tournant à droite ou avec le côté des corps de charrue tournant à gauche, sachant que la roue d'appui pivotante (1) présente une traverse d'appui (5) qui est reliée d'une part, via une articulation (6), au cadre porteur (7) de la roue d'appui pivotante (1) et de l'autre, via une autre articulation (8), à la partie pivotante (9) ou à la tige (25) de la roue d'appui pivotante (1), par l'intermédiaire de laquelle le cadre de la charrue (4) s'appuie indirectement sur la roue (11) de la roue d'appui pivotante (1) afin de limiter la profondeur de travail de la charrue réversible attelée (2), sachant que la tige (25) présente une butée pivotante qui est reliée à la traverse d'appui (5) et que la butée pivotante est réalisée de manière à pouvoir être sortie par la force de gravité hors de la position de butée autour d'un axe de guidage (16) disposé sur la tige (25) pendant le processus de rotation afin d'éliminer la fonction d'appui et à pouvoir être remise en place en position de butée par la force de gravité après le processus de rotation afin d'éliminer la profondeur de travail, sachant que l'axe de guidage (16), dans le cas d'une charrue réversible attelée (2) pour laquelle la roue d'appui pivotante (1) est entraînée en dessous du cadre de la charrue (4) pendant le processus de rotation, est disposé en position de rotation à moitié tournée et en position de travail au-dessus du centre de gravité de la butée pivotante (15),
**caractèrisèe par le fait**
que la traverse d'appui (5) présente un amortisseur (20) qui est réalisé de façon à freiner et/ou à amortir le processus de pivotement de la pièce pivotante (9) de la roue d'appui pivotante (1).
